# EUROPÄISCHE PATENTSCHRIFT

(11) **EP 3 609 736 B1**
(45) Veröffentlichungstag und Bekanntmachung des Hinweises auf die Patenterteilung: **08.01.2025**
(21) Anmeldenummer: 18717621.9
(22) Anmeldetag: 13.04.2018
(51) Int. Cl.: B60N 2/427, B60N 2/24, B60N 2/42, B60R 22/28, B60R 22/12, F41H 7/04

(54) **STOSSABSORBIERENDER SITZ MIT DÄMPFUNGSGLIEDERN**
SHOCK-ABSORBING SEAT HAVING DAMPING MEMBERS
SIÈGE ABSORBANT LES CHOCS AVEC ÉLÉMENTS D'AMORTISSEMENT

(30) Priorität: 13.04.2017 DE 102017108072
(43) Veröffentlichungstag der Anmeldung: 19.02.2020
(73) Patentinhaber: Rheinmetall Protection Systems GmbH, 53227 Bonn (DE)
(72) Erfinder: BUDER, Francois, 53859 Niederkassel/Rheidt (DE); INDEN, Michael, 50169 Kerpen (DE); NEULING, Rene, 53773 Hennef (DE)
(74) Vertreter: DREISS Patentanwälte PartG mbB
(86) Internationale Anmeldenummer: PCT/EP2018/059600
(87) Internationale Veröffentlichungsnummer: WO 2018/189396

(56) Entgegenhaltungen:
- EP-A1- 2 650 168
- WO-A1-97/37876
- DE-A1- 102010 020 533
- US-A1- 2013 033 056
- US-A1- 2013 049 415

## Beschreibung

Die Erfindung betrifft einen Sitz für ein Landfahrzeug, der mit zumindest einem Dämpfungsglied ausgerüstet ist.

Es sind Sitze für Landfahrzeuge, insbesondere für militärische Einsatzzwecke, bekannt, die Dämpfungsglieder aufweisen, um von außen auf das Fahrzeug einwirkende Stöße zu absorbieren und damit den Insassen, die auf diesen Sitzen sitzen, Schutz bieten. Stöße, die von außen auf das Fahrzeug einwirken, sind im Regelfall Stoßwirkungen von explosiven Materialien, wie sie zum Beispiel in Minen, über die das Fahrzeug fährt, Verwendung finden.

Aus der DE 10 2008 053 152 A1 ist ein Deformationselement zum Schutz einer Einrichtung, insbesondere einer Fußauflagenplatte in einem insbesondere militärischen Fahrzeug bekannt, wobei das Deformationselement im Wesentlichen U-förmig gestaltet ist.

Die US 2013/0033056 A1 offenbart dazu ein Dämpfungssystem mit Gurten für einen hängend angeordneten Sitz. Dazu sind Gurte offenbart, welche Zonen aufweisen, welche den Gurt mehrlagig und durch Nähte gehalten führen. Bei Krafteinwirkung können diese Nähte dann zur Kraftkompensation reißen.

Die DE 10 2010 020533 A1 offenbart eine schockabsorbierende Strukturlagerung, die eines oder mehrere stabförmige Crashelemente umfasst. Das oder die stabförmigen Crashelemente weisen jeweils eine, durch mindestens zwei Laschen überbrückte Sollbruchstelle auf.

Der Erfindung liegt die Aufgabe zu Grunde, einen Sitz für ein Fahrzeug bereitzustellen, mit dem die Person vor äußeren Stoßwirkungen geschützt ist. Der Sitz gemäß der Erfindung umfasst die technischen Merkmale, die im Anspruch 1 definiert sind.

Erfindungsgemäß wird ein Dämpfungsglied vorgeschlagen, welches zwei Angriffspunkte besitzt, um impulsartig auftretende Kräfte in das Dämpfungsglied einzuleiten.

Weiterhin besitzt das Dämpfungsglied Befestigungselemente, über welchen das Dämpfungsglied befestigt werden kann. Bevorzugter Weise sind die Befestigungspunkte an den Angriffspunkten angeordnet, so dass die Krafteinwirkung auf das Dämpfungsglied durch die Befestigungselemente geschehen kann.

In einer besonderen Ausführungsform sind die Befestigungselemente als Rohre ausgeführt. Diese können dann durch Einführen in bestehende Rohre eines Sitzes und/oder des Chassis eines Fahrzeuges angeordnet werden. Zur Fixierung der Rohre wird dann vorgeschlagen, Löcher in en Rohren vorzusehen, welche Mittels Schraub- oder Steckverbindungen fixiert werden.

Eine solche Fixierung bzw. Ausführung als steckbares Rohrsystem beinhaltet den Vorteil einer schnellen Austauschbarkeit. Dementsprechend können die Dämpfungsglieder auch als Ersatzteile eingesetzt werden.

Das Dämpfungsglied weist weiterhin ein Absorptionsmittel auf, welches in der Lage ist, eingeleitete Kräfte aufzunehmen und dadurch die impulsartig auftretenden Krafteinwirkungen dämpfen kann.

Ein solches Absorptionsmittel kann ein komprimierbarer Stoff sein oder ein elastischer Stoff, welcher nach Krafteinwirkung wieder in seine Ausgangslage zurückkehrt.

Erfindungsgemäß ist ein Zusatzabsorptionsmittel vorgesehen, welches ebenfalls Kräfte aufnehmen kann und somit zur Dämpfung beiträgt. Die Dämpfung geschieht dann durch das Zusammenwirken von Absorptionsmittel und Zusatzabsorptionsmittel.

Das Zusatzabsorptionsmittel nimmt die einwirkenden Kräfte durch Verformungsarbeit auf. Das bedeutet, dass das Zusatzabsorptionsmittel während der Krafteinwirkung verformt wird. Eine solche Verformung geschieht jedoch nicht bei konventioneller Belastung und/oder Krafteinwirkung auf das Dämpfungsglied. Erst bei Überschreiten einer gewissen Kraft, wird diese in Verformarbeit umgesetzt. Dadurch bleibt die Form bei normaler Belastung des Dämpfungsgliedes erhalten.

Erfindungsgemäß weist das Dämpfungsglied ein Gehäuse auf, welches verschiedene Formen aufweisen kann. Dabei wird vorgeschlagen, dass Absorptionsmittel innerhalb des Gehäuses anzuordnen. Das Zusatzabsorptionsmittel kann dann das Gehäuse oder ein Teil des Gehäuses sein.

Um eine Verformung des Gehäuses oder von Teilen des Gehäuses zu unterstützen, sind die zur Verformung bestimmten Teile des Gehäuses mit runden Formen versehen. Bevorzugter Weise wird deshalb für das Gehäuse eine Herz- oder Kleeblattform vorgeschlagen, da diese Formen sich als besonders geeignet für eine entsprechende Verformung erwiesen haben.

In einer Ausführungsform nach dem Stand der Technik ist das Dämpfungsglied als Gurt ausgeführt. Dabei wirkt der Gurt durch seine physikalischen Eigenschaften als Absorptionsmittel. Bevorzug wird der Gurt hierzu mit einer Elastizität versehen und zumindest bereichsweise mehrlagig ausgeführt. Das Zusatzabsorptionsmittel besteht dabei aus Nähten, welche mindestens zwei Lagen des Gurtes miteinander verbinden.

Die mögliche Verformarbeit des Zusatzabsorptionsmittels wirkt hierbei durch das Auftrennen der Nähte bei Krafteinwirkung.

Die Nähte des Gurtes werden bevorzugter Weise parallel zueinander und quer zum Gurt verlaufend angeordnet. Damit entsteht eine Anzahl von parallel zueinander verlaufenden Nähten, welche in einem Abstand zueinander quer zum Gurt verlaufen. Die Abstände können dabei für alle Nähte gleich oder unterschiedlich ausgeführt sein. Diese Nähte sind zumindest bereichsweise an einem Gurt vorgesehen.

Ein solcher Gurt kann dabei mit seinen Angriffspunkten an einem Sitz und/oder am Chassis angelenkt sein. Der Gurt kann dazu so angeordnet sein, dass eine Person auf dem Sitz geschützt ist oder bewegliche Teile des Sitzes gedämpft werden. Beispielsweise kann der Gurt an der Sitzfläche und der Lehne des Sitzes angelenkt sein, um eine klappbare Sitzfläche zu dämpfen. Bei einer beispielhaften Krafteinwirkung von unten wirkt die Kraft dann auf den Sitz. Wenn der Sitz eine bewegliche oder klappbare Sitzfläche aufweist, kann durch die Trägheit der Person auf dem Sitz eine Aufwärtsbewegung der Sitzfläche gedämpft werden, wenn ein Dämpfungsglied als Gurt ausgeführt ist und an Sitzfläche und der Sitzlehne angelenkt wird. Ebenso ist hierzu eine Anlenkung an Sitzfläche und Chassis denkbar.

Zur verbesserten Kraftaufnahme wird weiterhin vorgeschlagen, die Angriffspunkte versetzt zueinander anzuordnen, so dass sie nicht fluchten. Das hat den Vorteil, dass bei Krafteinwirkung an den Angriffspunkten die Befestigungselemente sich in Richtung des Dämpfungsglieds bewegen können, ohne sich gegenseitig zu behindern.

Die Dämpfungsglieder sind so ausgeführt, dass sie in einem Fahrzeug eingesetzt werden können, um einen Fahrzeugsitz gegen Stoßkräfte, die auf den Sitz einwirken, abzudämpfen. Dazu wird vorgeschlagen, mindestens ein Dämpfungsglied am Sitz des Fahrzeugs anzuordnen. Ebenso kann die Bewegung einer im Sitz befindlichen Person durch die Dämpfungsglieder gedämpft werden.

Der Sitz kann dadurch gedämpft werden, dass mindestens ein Dämpfungsglied zwischen Sitz und Fahrzeugchassis angeordnet ist. Ebenso kann der Sitz auch mit entsprechenden Gurten ausgestattet werden. Auch eine Kombination der vorgenannten Anordnungen ist denkbar.

Weitere Merkmale der vorliegenden Erfindung zeigen die Figuren:
Fig. I: Ein Sitz mit Dämpfungsgliedern und rückseitiger Aufhängung
   Fig. I.1: Sitz in Vorderansicht
   Fig. I.2: Sitz in Seitenansicht
   Fig. I.3: Sitz in perspektivischer Darstellung
   Fig. I.4: Sitz in Draufsicht
   Fig. I.5: Dämpfungsglied in Herzform
   Fig. I.6: Dämpfungsglied als Gurt
Fig. II: Ein Sitz mit Dämpfungsgliedern und seitlicher Aufhängung
   Fig. II.1: Sitz in Vorderansicht
   Fig. II.2: Sitz in Seitenansicht
   Fig. II.3: Sitz in perspektivischer Darstellung
   Fig. II.4: Sitz in Draufsicht
   Fig. II 5: Dämpfungsglied in Herzform
   Fig. II.6: Dämpfungsglied als Gurt
   Fig. II.7: Nähte an einem Dämpfungsglied als Gurt
Fig. III: Ein Sitz mit Dämpfungsgliedern, am Chassis eines Fahrzeugs montiert
   Fig. III.1: Sitz in Vorderansicht
   Fig. III.2: Sitz in Seitenansicht
   Fig. III.3: Sitz in perspektivischer Darstellung
   Fig. III.4: Sitz in Draufsicht
   Fig. III.5: Dämpfungsglied in Kleeblattform
   Fig. III.6: Dämpfungsglied als Gurt
   Fig. III.7: Dämpfungsglieder zwischen Sitz und Chassis

In Figur I ist dazu ein Dämpfungsglied 1 vorgesehen, welches ein Gehäuse aufweist und bei seitlicher Betrachtung in etwa herzförmig ausgestaltet ist. An jeder Seite des herzförmigen Dämpfungsgliedes 1 ist ein Befestigungselement 3 an den Angriffspunkten 2 angeordnet. Bevorzugter Weise ist das Befestigungselement 3 rohrförmig gestaltet. Die Längsachsen der beiden Rohre sind höhenversetzt zueinander. Das im Querschnitt herzförmige Dämpfungsglied 1 ist gebildet von einem die schmaleren Außenseiten umgebenden Blech, an dem die Rohre angeordnet, insbesondere angeschweißt sind. Das Innere des herzförmigen Dämpfungsgliedes 1 ist mit einem elastisch verformbaren Material ausgefüllt, welches das Absorptionsmittel darstellt.

Über die beiden Rohrenden, die von dem herzförmigen Dämpfungsglied 1 abstehen, wird der Sitz 10 zum einen mit seinem Chassis und zum anderen mit einem Chassis 11 des Fahrzeuges verbunden. Ebenfalls könne die Rohre in bereits vorhandene Rohre des Sitzes und/oder des Chassis eingeführt werden, um eine Steckverbindung zu erzeugen. Hierzu wird über dafür vorgesehene Löcher 6 in den Rohren eine Fixierung der Steckverbindung ermöglicht. Eine solche Verbindung ist beispielsweise in Figur I.5 gezeigt.

Kommt es zu einer Stoßeinwirkung auf das Fahrzeug von außen, ermöglicht das herzförmige Dämpfungsglied 1 eine Absorbierung der Stoßenergie sowohl durch die Verformung des äußeren herzförmigen

Bleches (Zusatzabsorptionsmittel 4), als auch des in seinem Inneren befindlichen elastisch verformbaren Materials (Absorptionsmittel), um die Stoßenergie abzubauen.

Eine Verformung ist dadurch realisiert, dass die beiden Längsachsen der beiden Befestigungsrohre nicht fluchtend, sondern höhenversetzt zueinander sind. Dies lässt ein Ineinanderschieben des herzförmigen Dämpfungsgliedes 1 zwecks Abbau der Deformationsenergie und damit eine deutliche Abschwächung der von außen einwirkenden Stoßwirkung zu, sodass die auf dem Sitz 10 sitzende Person vor dieser äußeren Beeinflussung sehr gut geschützt wird.

In einer weiteren Ausgestaltung nach dem Stand der Technik ist das Dämpfungsglied 1 in einem Gurt 5 integriert. Mit einem solchen Gurt 5 kann sich die auf dem Sitz 10 sitzende Person anschnallen, Gurte können aber auch am Sitz 10 und/oder dem Chassis eines Fahrzeugs angelenkt werden, um bewegliche Teile des Sitzes 10 zu dämpfen. Hierbei ist vorgesehen, dass in dem Bereich, in dem der Gurt 5 das Dämpfungsglied 1 bildet, mindestens zwei Lagen des Gurtmaterials im Wesentlichen deckungsgleich übereinander angeordnet sind.

Quer zu dem Verlauf des Gurtes 5 sind in Abständen zueinander mehrere Nahtlinien zueinander angebracht, die die beiden im Wesentlichen flächendeckend zueinander angeordneten Lagen von Gurtmaterial miteinander verbinden. Im Übrigen ist der Gurt 5 in üblicher Weise einerseits mit dem Sitz 10 und andererseits mit dem Chassis 11 oder nochmals mit dem Sitz verbunden. Die Befestigungen der Gurte 5 bilden hierzu die Befestigungselemente 3 des Dämpfungsgliedes 1 und die Enden des Gurtes 5 bilden die Angriffspunkte 2.

Die mehreren im Längsverlauf des Gurtes 5 hintereinander und parallel zueinander angeordneten Nahtlinien bewirken eine Art Sollbruchstelle, da die Nähte in Folge der Stoßeinwirkung von außen nacheinander aufreißen und dadurch die Stoßenergie abbauen. Im Normalbetrieb des Fahrzeuges sind diese mehreren parallel zueinander angeordneten Nahtlinien so dimensioniert, dass sie im Normallfall bis zu einer Höchstbelastung, mit der der Sitz 10 belastet werden darf, nicht reißen.

In Figur II.7 ist eine mögliche Nahtanordnung für ein Dämpfungsglied 1 als Gurt 5 gezeigt. Die parallel zueinander und quer zum Gurt 5 verlaufenden Nähte verbinden hierbei zwei Lagen des Gurtes 5. Der Gurt 5 selbst ist im Bereich der Nähte mehrlagig. Dies kann durch Schlaufen, welche der Gurt 5 im Bereich der Nähte bildet, ausgeführt sein, der Gurt 5 kann aber auch durch überlappendes Übereinanderlegen mehrerer Gurtstücke den Mehrlagigen Bereich bilden.

Bei Krafteinwirkung auf den Gurt an den Angriffspunkten 2 wirkt dann eine Scherkraft auf die Nähte, welche dadurch aufgetrennt werden können und die Dämpfung des Dämpfungsgliedes 1 bewirken. Die Nähte können, wie gezeigt jeweils zwei Lagen verbinden, aber sie können auch durch alle Lagen durchgehend gestaltet sein. Die unterschiedlichen Nähte können dabei aus unterschiedlichen Materialen gestaltet sein, mit unterschiedlichem Reißverhalten.

Der Gurt ist so gestaltet, dass unter normalen Bedingungen oder Krafteinwirkungen das Dämpfungsglied nicht aktiviert wird. Nur ab einer gewissen Belastungsgrenze wird das Dämpfungsglied aktiv.

In Figur I ist ein Sitz eines Fahrzeuges gezeigt, der mittels des herzförmigen Dämpfungsgliedes 1 über daran angeordnete Rohre oder dergleichen mit dem Sitz 10 verbunden ist. Andererseits ist das Dämpfungsglied 1 ebenfalls über Rohre oder dergleichen mit einem nicht dargestellten Chassis 11 eines Fahrzeuges verbunden. Außerdem ist der dargestellte Sitz 10 mit dem in dem Gurt 5 integrierten Dämpfungsglied 1 ausgerüstet. In dieser Darstellung ist der Sitz 10 rückseitig über mehrere herzförmige Dämpfungsglieder 1 an dem Chassis 11 des Fahrzeuges angeordnet.

In Figur II ist ebenfalls gezeigt, dass als Dämpfungsglieder 1 das herzförmige Dämpfungsglied 1 sowie das in dem Gurt 5 integrierte Dämpfungsglied 1 zur Anwendung kommen. Allerdings ist bei dieser Ausgestaltung der Sitz 10 über die herzförmigen Dämpfungsglieder 1 nicht rückseitig, sondern seitlich an geeigneter Stelle im Fahrzeug angeordnet und befestigt.

Figur II.2 zeigt eine besonders bevorzugte Anordnung der als Gurt 5 ausgeführten Dämpfungsglieder 1. Dabei wird der Gurt 5 mit seinen Angriffspunkten 2 jeweils am Sitz 10 angelenkt, wobei ein Ende des Gurtes 5 an der Lehne des Sitzes angelenkt wird und das andere Ende des Gurtes 5 am Sitz 10. Dadurch kann der Sitz 10 bei Krafteinwirkung auf das Fahrzeug gedämpft werden, wenn die Sitzfläche des Sitzes 10 beweglich, z.b. klappbar, gestaltet ist.

In Figur III kommen ebenfalls beide Arten von Dämpfungsgliedern 1 zur Anwendung, wobei hier kein herzförmiges, sondern ein kleeblattförmiges Dämpfungsglied 1 eingesetzt wird. Dieses zumindest eine kleeblattförmige Dämpfungsglied 1 ist angeordnet zwischen einem Chassis 11 des Fahrzeuges, beispielsweise einer Bodenplatte, und einem Chassis des Sitzes 10, beispielsweise einer Unterseite der Sitzfläche.

Bei allen Figuren ist gezeigt, dass sowohl das herz- beziehungsweise kleeblattförmige Dämpfungsglied 1 und das in den Gurt 5 integrierte Dämpfungsglied 1 zur Anwendung kommen. Dadurch erhöht sich die Schutzwirkung deutlich. Andererseits ist es denkbar, dass bei den drei gezeigten Darstellungsformen des Sitzes 10 auch nur das herzförmige, nur das kleeblattförmige oder nur das in den Gurt 5 integrierte Dämpfungsglied 1 zum Einsatz kommen kann. Auch die Kombination zumindest eines herzförmigen mit zumindest einem kleeblattförmigen Dämpfungsglied 1 kann in Betracht kommen.

Alternativ zu dem vorstehend beschriebenen herzförmigen Querschnitt des Dämpfungsgliedes 1 kommt, wie in Figur III gezeigt, auch ein kleeblattförmiger Querschnitt in Betracht. Ein solcher kleeblattförmiger Querschnitt des Dämpfungsgliedes 1 findet dann Anwendung, wenn es zum Beispiel zwischen dem Chassis 11 des Fahrzeuges und dem Chassis des Sitzes angeordnet ist, sodass die bei dem herzförmigen Dämpfungsglied 1 erforderlichen Befestigungsrohre entfallen können, aber nicht müssen. Auch bei einem kleeblattförmigen Dämpfungsglied 1 können Rohre befestigt sein, um damit das Dämpfungsglied 1 an seinem Einbauort anzuordnen und zu befestigen.

Die Erfindung ist nicht auf die vorgenannten Merkmale beschränkt. Vielmehr sind weitere Ausgestaltungen möglich, solange sie zum Schutzumfang gehören, der durch die Ansprüche definiert ist. So kann das Zusatzabsorptionselement als Hülle um das Absorptionselement ausgestaltet sein. Ein Gehäuse kann dann zusätzlich um die beiden dämpfenden Elemente angeordnet sein. Ebenfalls sind Steckverbindungen an den Angriffspunkten und/oder Befestigungselemente möglich, um ein einfaches Auswechseln der Dämpfungsglieder zu ermöglichen.

### BEZUGSZEICHENLISTE

- 1: Dämpfungsglied
- 2: Angriffspunkt
- 3: Befestigungselement
- 4: Zusatzabsorptionsmittel
- 5: Gurt
- 6: Loch

- 10: Sitz
- 11: Chassis

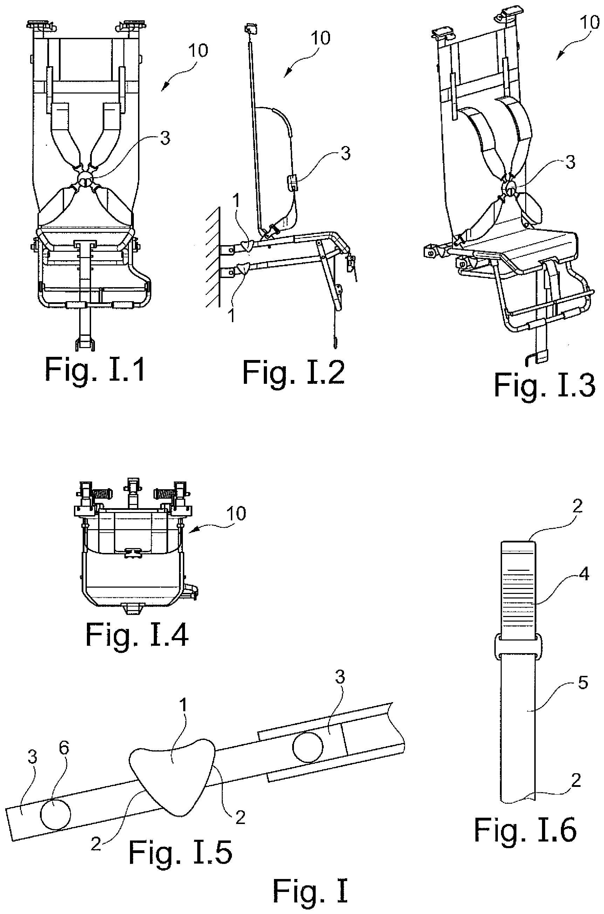

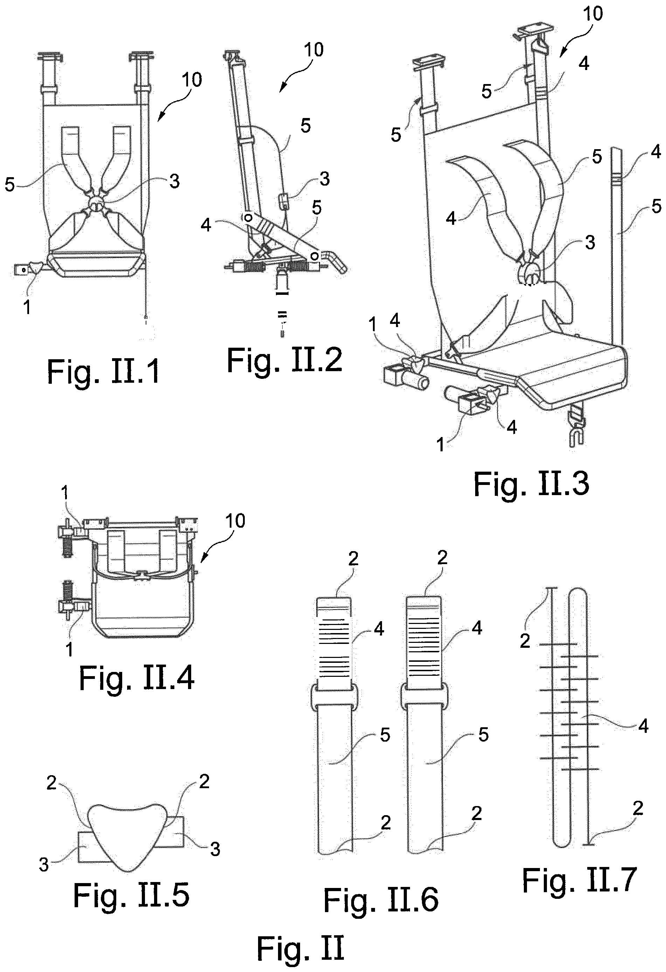

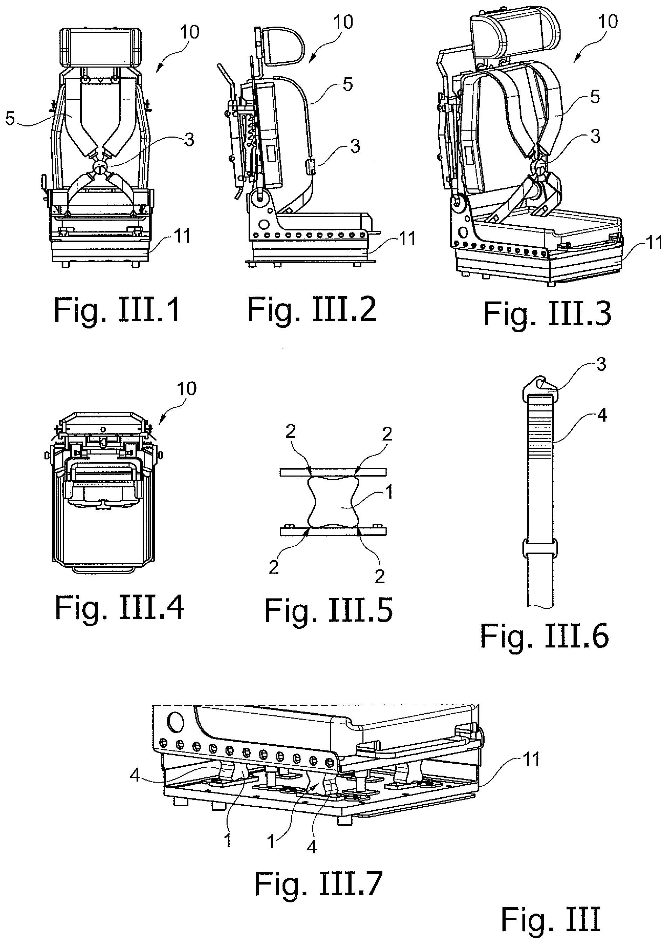

## Patentansprüche

1. Sitz (10) für ein Landfahrzeug,
- wobei der Sitz (10) mindestens ein Dämpfungsglied (1) umfasst,
- wobei das Dämpfungsglied (1) mindestens zwei Angriffspunkte (2) sowie Befestigungselemente (3) aufweist,
- wobei das Dämpfungsglied (1) ein Absorptionsmittel aufweist,
- wobei ein Zusatzabsorptionsmittel (4) vorgesehen ist, welches zusammen mit dem Absorptionsmittel eine Stoßabsorption bewirkt,
- wobei die Angriffspunkte (2) versetzt zueinander angeordnet sind, und
- wobei die Angriffspunkte (2) so angeordnet sind, so dass sie nicht miteinander fluchten,
- wobei das Dämpfungsglied (1) ein Gehäuse aufweist, **dadurch gekennzeichnet, dass** der Sitz (10) mindestens einen Gurt (5) umfasst und das Dämpfungsglied (1) in den Gurt (5) integriert ist.

2. Sitz (10) nach Anspruch 1, **dadurch gekennzeichnet, dass**
- das Absorptionsmittel innerhalb des Dämpfungsglieds (1) angeordnet ist.

3. Sitz (10) nach Anspruch 1 oder 2, **dadurch gekennzeichnet, dass**
- das Zusatzabsorptionsmittel (4) aus verformbaren Teilen des Gehäuses besteht.

4. Sitz (10) nach einem der Ansprüche 1 bis 3, **dadurch gekennzeichnet, dass**
- die Befestigungselemente (3) an den Angriffspunkten (2) angeordnet sind.

5. Sitz (10) nach einem der Ansprüche 1 bis 4, **dadurch gekennzeichnet, dass**
- die Befestigungselemente (3) zur Befestigung an Rohren ausgeführt sind.

6. Sitz (10) nach einem der Ansprüche 1 bis 5, **dadurch gekennzeichnet, dass**
- das Absorptionsmittel aus einem elastisch verformbaren Material besteht.

7. Sitz (10) nach einem der Ansprüche 1 bis 6, **dadurch gekennzeichnet, dass**
- das Dämpfungsglied herzförmig oder kleeblattförmig gestaltet ist.

8. Sitz (10) nach einem der Ansprüche 1 bis 7, **dadurch gekennzeichnet, dass**
- das Dämpfungsglied (1) zwischen Sitz (10) und einem Chassis (11) des Landfahrzeugs angeordnet werden kann.

## Claims

1. Seat (10) for a land vehicle,
- the seat (10) comprising at least one damping member (1),
- the damping member (1) having at least two points of application (2) as well as fastening elements (3),
- the damping member (1) having an absorption means,
- an additional absorption means (4) being provided which, together with the absorption means, effects shock absorption,
- the points of application (2) being arranged offset relative to one another, and
- the points of application (2) being arranged so that they are not in alignment with one another,
- the damping member (1) having a housing, **characterized in that** the seat (10) comprises at least one belt (5) and the damping member (1) is integrated into the belt (5).

2. Seat (10) according to claim 1, **characterized in that**
- the absorption means is arranged within the damping member (1).

3. Seat (10) according to claim 1 or claim 2, **characterized in that**
- the additional absorption means (4) consists of deformable parts of the housing.

4. Seat (10) according to any of claims 1 to 3, **characterized in that**
- the fastening elements (3) are arranged at the points of application (2).

5. Seat (10) according to any of claims 1 to 4, **characterized in that**
- the fastening elements (3) are made to be fastened to tubes.

6. Seat (10) according to any of claims 1 to 5, **characterized in that**
- the absorption means consists of an elastically deformable material.

7. Seat (10) according to any of claims 1 to 6, **characterized in that**
- the damping member is heart-shaped or cloverleaf-shaped.

8. Seat (10) according to any of claims 1 to 7, **characterized in that**
- the damping member (1) can be arranged between the seat (10) and a chassis (11) of the land vehicle.

## Revendications

1. Siège (10) pour un véhicule terrestre,
- dans lequel le siège (10) comprend au moins un organe d'amortissement (1),
- dans lequel l'organe d'amortissement (1) présente au moins deux points d'attaque (2) ainsi que des éléments de fixation (3),
- dans lequel l'organe d'amortissement (1) présente un moyen d'absorption,
- dans lequel un moyen d'absorption supplémentaire (4) est prévu, lequel conjointement avec le moyen d'absorption, provoque une absorption des chocs,
- dans lequel les points d'attaque (2) sont décalés les uns par rapport aux autres, et
- dans lequel les points d'attaque (2) sont disposés de telle sorte qu'ils ne sont pas alignés les uns avec les autres,
- dans lequel l'organe d'amortissement (1) présente un boîtier, **caractérisé en ce que** le siège (10) comprend au moins une sangle (5) et l'organe d'amortissement (1) est intégré dans la sangle (5).

2. Siège (10) selon la revendication 1**, caractérisé en ce que**
- le moyen d'absorption est disposé à l'intérieur de l'organe d'amortissement (1).

3. Siège (10) selon la revendication 1 ou 2**,** caractérisé en ce
- le moyen d'absorption supplémentaire (4) est constitué de parties déformables du boîtier.

4. Siège (10) selon l'une quelconque des revendications 1 à 3, **caractérisé en ce que**
- les éléments de fixation (3) sont disposés sur les points d'attaque (2).

5. Siège (10) selon l'une quelconque des revendications 1 à 4, **caractérisé en ce que**
- les éléments de fixation (3) sont conçus pour être fixés à des tubes.

6. Siège (10) selon l'une quelconque des revendications 1 à 5, **caractérisé en ce que**
- le moyen d'absorption est constitué d'un matériau élastiquement déformable.

7. Siège (10) selon l'une quelconque des revendications 1 à 6, **caractérisé en ce que**
- l'organe d'amortissement est conçu en forme de cœur ou en forme de trèfle.

8. Siège (10) selon l'une quelconque des revendications 1 à 7, **caractérisé en ce que**
- l'organe d'amortissement (1) peut être disposé entre le siège (10) et un châssis (11) du véhicule terrestre.
